Europäisches Patentamt

European Patent Office

Office européen des brevets

(11) Veröffentlichungsnummer: **0 080 066**
A1

# (12) EUROPÄISCHE PATENTANMELDUNG

(21) Anmeldenummer: 82109778.9

(22) Anmeldetag: 22.10.82

(51) Int. Cl.³: **B 22 F 1/02**, B 22 F 3/02, C 01 B 3/00

(30) Priorität: 12.11.81 DE 3144913

(43) Veröffentlichungstag der Anmeldung: 01.06.83
Patentblatt 83/22

(84) Benannte Vertragsstaaten: **AT BE CH DE FR GB IT LI LU NL SE**

(71) Anmelder: **Thyssen Industrie AG, Am Thyssenhaus 1, D-4300 Essen (DE)**
Anmelder: **Thyssen Edelstahlwerke AG, Oberschlesienstrasse 16, D-4150 Krefeld (DE)**

(72) Erfinder: **Frehn, Fritz, Dürerstrasse 50, D-4150 Krefeld (DE)**
Erfinder: **Kaas, Werner, Buchenstrasse 173, D-4220 Dinslaken (DE)**

(74) Vertreter: **Eberhard, Friedrich, Dr., Am Thyssenhaus 1, D-4300 Essen (DE)**

(54) **Verfahren zum Verpressen spröder grobkörniger Metalllegierungspulver zu geformten Presslingen und deren Verwendung für Hydridspeicher.**

(57) Pulver aus spröden Metallegierungen, wie z.B. Fe-Al, Fe-Ti, Ti-Zr-Cr-Mn, lassen sich ohne preßerleichternde Zusatzstoffe nicht zu Formlingen pressen. Bekannte Zusatzstoffe bewirken verschiedene Nachteile, wie mangelhafte Bruchfestigkeit, Zerfallsneigung bei Wärmeeinwirkung und mangelhafte Speicherfähigkeit für Gase und/oder Flüssigkeit im Preßling.

Erfindungsgemäß wird auf Teilabschnitte der Oberfläche der Pulverteilchen aus der spröden Metallegierung ein demgegenüber weicheres Metall aufgebracht, beispielsweise Aluminium in einer Menge von 1 bis 15 Gew.-%. Das kann geschehen durch galvanisches Abscheiden des weicheren Metalles oder durch Behandeln der Mischung weiches Metallpulver/sprödes Metallegierungspulver in einer Mühle.

Die fertigen Preßlinge sind für Hydridspeicher in Wasserstoffantrieben von Fahrzeugen und für stationäre Speicher vorgesehen.

EP 0 080 066 A1

0080066

Essen, den 11.11.1981
PZ 3278    EB/bk

Thyssen Industrie AG          Thyssen Edelstahlwerke AG
Am Thyssenhaus  1             Oberschlesienstr. 16
4300 Essen  1                 . 4150 Krefeld  1


Verfahren zum·Verpressen spröder grobkörniger Metallegierungspulver zu geformten Preßlingen und deren Verwendung für Hydridspeicher


Die Erfindung bezieht sich auf ein Verfahren zum Verpressen spröder
grobkörniger Metallegierungspulver zu geformten Preßlingen und deren
Verwendung für Hydridspeicher zur Wasserstoffeinlagerung.

Unter "grobkörnigem" Pulver wird ein solches mit einer Korngröße von
größer als 0,1 mm verstanden. Solche grobkörnigen Pulver mit im Mittel
0,5 bis 2 mm Korngröße aus spröden·Metallegierungen, wie z.B. Fe-Al,
Ni-Al, Co-Al, Fe-Ti, Fe-Ti-Mn oder Ti-Zr-Cr-Mn lassen sich ohne Preßhilfsmittel nicht verpressen. Die Verwendung von preßerleichternden Zusätzen, z.B. Öl, Fett, Seife, Kunstharz, scheiden für viele Anwendungsfälle aus. Diese üblichen preßerleichternden Zusätze haben nämlich verschiedene Nachteile. Insbesondere bewirken sie keine dauerhafte Bindung.
Die Bindung der Pulverteilchen aneinander erfolgt bei Verwendung dieser
preßerleichternden Zusätze praktisch durch Verkleben. Daher haben die
Preßlinge auch keine ausreichende Bruchfestigkeit. Ferner zersetzen
sich die Zusätze bei Wärmeeinwirkung oder die Preßlinge zerfallen. Bei
solchen Zusätzen, die die Pulverteilchen ganz umhüllen, verbleibt keine
ausreichende Austausch- bzw. Reaktionsfläche für in dem Pulverpreßling
gespeicherte Gase oder Flüssigkeiten.

0080066

Der Erfindung liegt nun die Aufgabe zugrunde, ein Verfahren zum Verpressen spröder grobkörniger Metallegierungspulver anzugeben, das eine dauerhaft feste Bindung der Pulverteilchen aneinander unter Erhaltung ihrer Reaktionsfähigkeit gewährleistet. Für viele Anwendungsfälle ist außerdem von Bedeutung, daß das verpreßte Metallegierungspulver gute thermische und elektrische Leitfähigkeit besitzt.

Zur Lösung dieser Aufgabe wird erfindungsgemäß vorgeschlagen, daß vor dem Verpressen Metall, das weicher ist als das zu verpressende Metallegierungspulver auf Teilabschnitte der Oberfläche der Pulverteilchen aufgebracht wird.

Für die Wirksamkeit des erfindungsgemäßen Verfahrens ist es von ausschlaggebender Bedeutung, daß die Pulverteilchen nicht vollständig von dem Metall umhüllt werden, sondern daß dieses nur partiell auf die Oberfläche der Pulverteilchen aufgebracht wird, so daß die Reaktionsfähigkeit der Pulverteilchen nicht beeinträchtigt wird.

Vorteilhafte Ausgestaltungen und Weiterbildungen der Erfindung sind den Unteransprüchen zu entnehmen.

Nach Anspruch 2 ist Aluminium als aufzutragendes Metall besonders geeignet, da es gegenüber dem Metallegierungspulver genügend weich ist, eine gute Benetzbarkeit, ein gutes Bindungsvermögen und gute thermische und elektrische Leitfähigkeit besitzt. Dabei hat sich eine Menge des aufzubringenden Aluminiums von 1 bis 15 Gew.-% der grobkörnigen Legierungspulverteilchen als besonders zweckmäßig erwiesen.

Anspruch 3 benennt weitere Metalle, die zur Lösung der Erfindungsaufgabe geeignet sind.

Das aufzubringende Metall kann gemäß Anspruch 4 auf galvanischem Weg auf der Oberfläche der grobkörnigen Legierungspulverteilchen abgeschieden werden.

Alternativ ist es nach Anspruch 5 auch möglich, das grobkörnige Metallegierungspulver (Korngröße über 0,1 mm) mit demgegenüber feinem Metallpulver (Korngröße unter 0,1 mm) in einer Kugelmühle zu mischen und so lange zu behandeln, bis sich das Metall flächenpartiell an die Metallegierungspulverteilchen angelagert hat.

Die Verfahren nach den Ansprüchen 4 und 5 gehen von der Erkenntnis aus, daß die Herstellung der Preßlinge lediglich durch Vermischen des grobkörnigen, spröden Metallegierungspulvers mit dem feinen, weichen Metallpulver und nachfolgendes Verpressen wegen vielfach unvermeidlicher Entmischung des Gemenges zu Preßlingen verminderter Qualität und/ oder zu Störungen beim automatischen Pressen führt.

Mit einem Preßdruck von 35 KN/cm$^2$ konnte erfindungsgemäß vorbehandeltes Pulver zu dichten und bruchfesten Preßlingen verpreßt werden. Dagegen gelang dies nicht bei spröden grobkörnigen Metallegierungspulvern, die in bekannter Weise verpreßt werden sollten. Selbst mit auf das Dreifache gesteigertem Preßdruck war keine Bindung der Pulverteilchen zu erzielen.

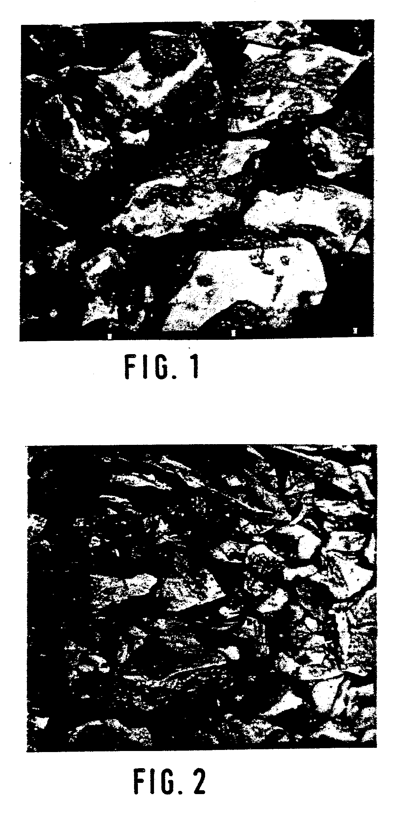

Die Figuren 1 und 2 zeigen Aufnahmen mit dem Raster-Elektronenmikroskop in 300-facher Vergrößerung eines erfindungsgemäß hergestellten Pulvers für die Verpressung. Deutlich sichtbar sind an Teilen der Oberfläche des grobkörnigen Metallegierungspulvers feinkörnige Pulverteilchen angelagert. Das verwendete Metallegierungspulver bestand aus TiFe mit einem Kornband von 0,1 bis 1,0 mm; es hatte eine Brinellhärte über 850 HB. Das feinkörnige Pulver (Korngröße unter 0,1 mm) bestand aus demgegenüber weichem Aluminium, dessen Brinellhärte im Bereich von 150 bis 250 HB lag.

Nach dem erfindungsgemäßen Verfahren hergestellte Preßlinge in Tabletten- oder Brikettform eignen sich in hervorragender Weise für die Verwendung als Hydridspeichermaterial, denn sie weisen alle an solche Teile gestellten Anforderungen auf, wie hohe Reaktionsfähigkeit, gute thermische und elektrische Leitfähigkeit, Aufrechterhaltung des Preßverbandes

0080066

auch bei höheren Temperaturen. Hydridspeicher dienen der Wasserstoffspeicherung und -abgabe bei wasserstoffangetriebenen Fahrzeugen, sowie stationärer Speicher.

0080066

Ansprüche:

1. Verfahren zum Verpressen spröder grobkörniger Metallegierungspulver zu geformten Preßlingen, dadurch gekennzeichnet, daß vor dem Verpressen Metall, welches weicher ist als das zu verpressende spröde Metallegierungspulver, auf Teilabschnitte der Oberfläche der Pulverteilchen aufgebracht wird.

2. Verfahren nach Anspruch 1, dadurch gekennzeichnet, daß Aluminium, vorzugsweise in einer Menge von 1 bis 15 Gew.-%, auf das Metallegierungspulver aufgebracht wird.

3. Verfahren nach Anspruch 1, dadurch gekennzeichnet, daß Kupfer, Nickel, Kobalt oder Silber auf das Metallegierungspulver aufgebracht werden.

4. Verfahren nach einem der Ansprüche 1 bis 3, dadurch gekennzeichnet, daß das Metall durch galvanische Abscheidung aufgebracht wird.

5. Verfahren nach einem der Ansprüche 1 bis 3, dadurch gekennzeichnet, daß das Metall in Pulverform dem Metallegierungspulver in einer Kugelmühle zugemischt und die Mischung so lange behandelt wird, bis sich das Metall an die Metallegierungspulverteilchen angelagert hat.

6. Verwendung von nach mindestens einem der Ansprüche 1 bis 5 hergestellten Preßlingen, insbesondere in Tabletten- oder Brikettform, für Hydridspeicher in Wasserstoffantrieben von Fahrzeugen, sowie stationärer Speicher.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | FR-A-2 444 881 (DAIMLER-BENZ AG) <br> * Ansprüche 7,9; Seite 9, Zeilen 1-29 * | 1-6 | B 22 F 1/02 <br> B 22 F 3/02 <br> C 01 B 3/00 |
| Y | GB-A-2 067 983 (U.S. DEPARTMENT OF ENERGY) <br> * Ansprüche 1,3; Seiten 2,3; Beispiele 1-3 * | 1-6 | |
| A | FR-A-2 312 321 (H. SCHLADITZ) | | |
| A | DE-A-1 521 443 (C. PFIZER) <br><br> * Spalte 1, Zeilen 1-61 * | | |

RECHERCHIERTE SACHGEBIETE (Int. Cl. 3)

B 22 F
C 01 B 3/00

Der vorliegende Recherchenbericht wurde für alle Patentansprüche erstellt.

| Recherchenort <br> DEN HAAG | Abschlußdatum der Recherche <br> 18-02-1983 | Prüfer <br> SCHRUERS H.J. |
|---|---|---|